# EUROPEAN PATENT SPECIFICATION

(11) **EP 3 135 514 B1**
(45) Date of publication and mention of the grant of the patent: **06.06.2018**
(21) Application number: 16174585.6
(22) Date of filing: 15.06.2016
(51) Int. Cl.: B60H 1/00, B60K 35/00, G06F 3/01, B60H 3/02, G05B 15/02, G06F 3/00, G06F 3/0484, B60K 37/06

(54) **AIR-CONDITIONING CONTROL APPARATUS, AIR-CONDITIONING APPARATUS, AIR-CONDITIONING CONTROL METHOD, AIR-CONDITIONING CONTROL SYSTEM AND NON-TRANSITORY RECORDING MEDIUM**
KLIMATISIERUNGSSTEUERUNGSVORRICHTUNG, KLIMATISIERUNGSVORRICHTUNG, KLIMATISIERUNGSSTEUERUNGSVERFAHREN, KLIMATISIERUNGSSTEUERUNGSSYSTEM UND ÜBERGANGSLOSES SPEICHERUNGSMEDIUM
APPAREIL DE COMMANDE D'UN APPAREIL DE CLIMATISATION, APPAREIL DE CLIMATISATION, PROCÉDÉ DE COMMANDE D'UN APPAREIL DE CLIMATISATION, SYSTÈME DE COMMANDE D'UN APPAREIL DE CLIMATISATION ET SUPPORT DE STOCKAGE NON TRANSITOIRE

(30) Priority: 23.07.2015 JP 2015145758
(43) Date of publication of application: 01.03.2017
(73) Proprietor: Panasonic Intellectual Property Management Co., Ltd., Osaka-shi, Osaka 540-6207 (JP)
(72) Inventor: MOCHIZUKI, Makoto, Chuo-ku, Osaka 540-6207 (JP); ARAI, Yuko, Chuo-ku, Osaka 540-6207 (JP)
(74) Representative: Grünecker Patent- und Rechtsanwälte PartG mbB

(56) References cited:
- EP-A1- 2 889 723
- EP-A2- 2 639 672
- WO-A1-2013/151614
- WO-A2-2015/086919
- US-A1- 2015 186 717

## Description

### BACKGROUND

### 1. Technical Field

The present invention relates to an air-conditioning control apparatus for controlling air-conditioning in a cabin, an air-conditioning apparatus, an air-conditioning control method, an air-conditioning control system, and a non-transitory recording medium (non-transitory storage medium) storing an air-conditioning control program.

### 2. Description of the Related Art

A recently proposed vehicle air-conditioning system recognizes a gesture input of a user and adjusts a set temperature or a flow rate in an air-conditioning apparatus (e.g., an air-conditioner) based on a result of the recognition (see, for example, Japanese Unexamined Patent Application Publication No. 2014-191780).

To avoid misrecognition in which an unintentional gesture of a user is erroneously recognized as an operation, proposed is a method of specifying operation target equipment by an operation of a user before a gesture input and notifying the user that the operation target equipment is specified (see, for example, Japanese Unexamined Patent Application Publication No. 2014-109994). In this manner, after the operation target equipment has been specified, a gesture input operation of the user is performed so that the operation can be further ensured. Japanese Unexamined Patent Application Publication No. 2014-109994 also discloses a method in which the user is notified by sound (voice) or display that the operation target equipment is specified.
WO 2015/086919 A2 relates to a control device with sensory feedback comprising a detector of gestures of the hand of a user, a sensory feedback unit connected to the gesture detector and providing sensory feedback to the user in accordance with the gestures of the user's hand. The sensory feedback unit includes a unit for blowing a stream of air towards an area for detecting gestures of the hand of the user.

### SUMMARY

In the case of notification by sound, however, the user needs to previously recognize a difference between the sound and sound (e.g., alarm) generated by another vehicle-mounted equipment. In the case of notification by voice, it takes time for the user to understand what the voice indicates. In the case of notification by display, the user needs to recognize by closely watching a displayed part, which hinders concentration of driving and causes the feeling of inconvenience.

With such notification by sound or display, the user cannot be promptly and intuitively notified that operation target equipment is notified (i.e., an input operation for the operation target equipment is accepted).

In an aspect of the present invention, provided are an air-conditioning control apparatus, an air-conditioning apparatus, an air-conditioning control method, an air-conditioning control system, an air-conditioning control program, and a recording medium that can notify a user promptly and intuitively that operation target equipment is specified.

In one general aspect, the techniques disclosed here feature an air-conditioning control apparatus including: an input unit that receives a detection signal from a sensor for detecting a presence of an object at an air-supply port of an air-conditioning apparatus and that receives a recognition result from a recognition device for recognizing a change request for changing setting of the air-conditioning apparatus by a user; and a control unit that controls the air-conditioning apparatus based on the detection signal. In a case where wind from the air-supply port is set at a first flow rate and the input unit receives the detection signal, the control unit outputs a first control signal for causing the air-conditioning apparatus to change the first flow rate to a second flow rate different from the first flow rate for a predetermined time and then set the wind from the air-supply port at the first flow rate again. In a case where the change request is issued, the control unit outputs a second control signal for causing the air-conditioning apparatus to adjust a property of wind from the air-supply port, based on the recognition result received by the input unit.

In one non-limiting and exemplary embodiment, a user can be promptly and intuitively notified that operation target equipment is specified.

It should be noted that general or specific embodiments may be implemented as a system, a method, an integrated circuit, a computer program, a storage medium, or any selective combination thereof.

Additional benefits and advantages of the embodiments will become apparent from the specification and drawings. The benefits and/or advantages may be individually obtained by the various embodiments and features of the specification and drawings, which need not all be provided in order to obtain one or more of such benefits and/or advantages.

### BRIEF DESCRIPTION OF THE DRAWINGS

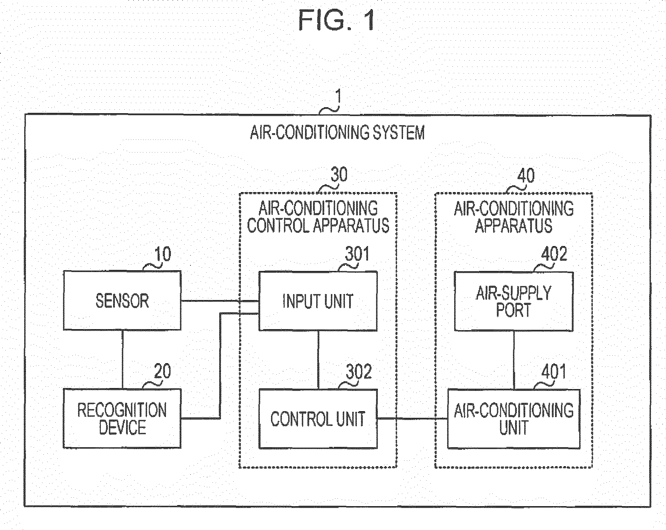

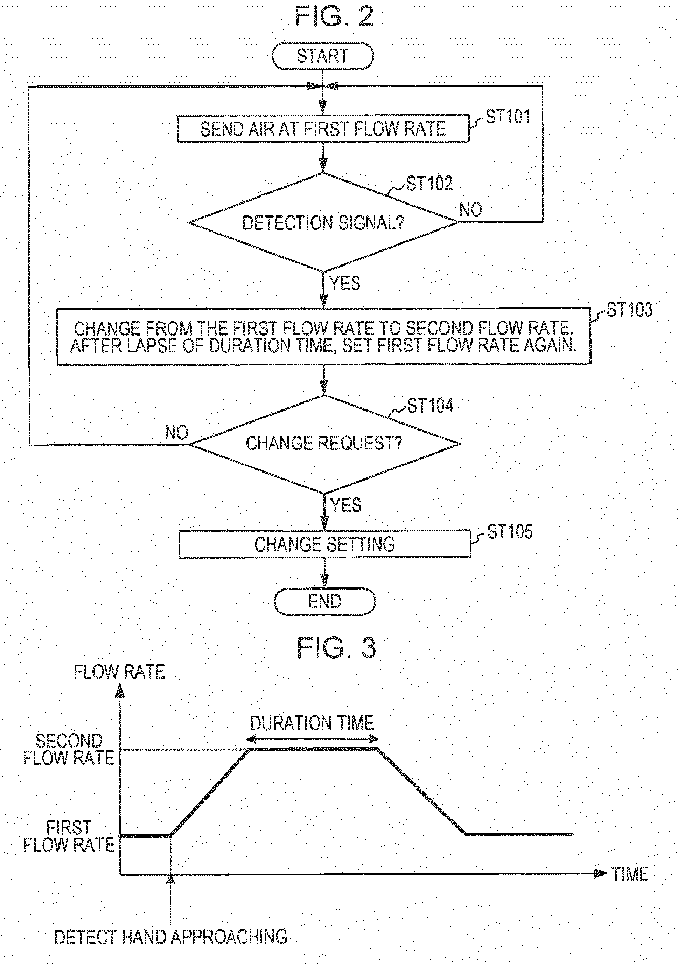

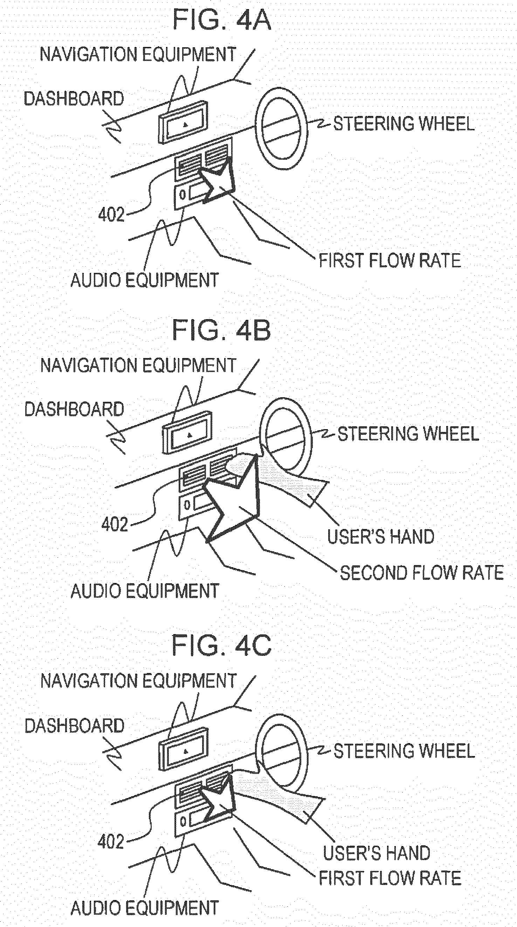

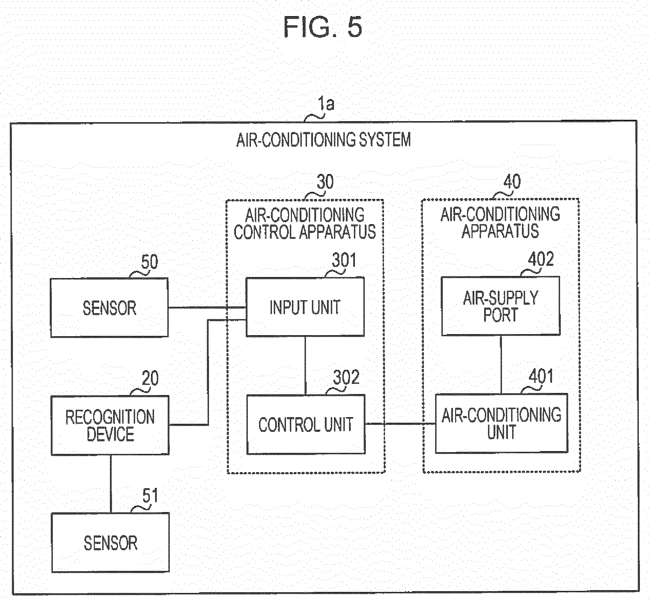

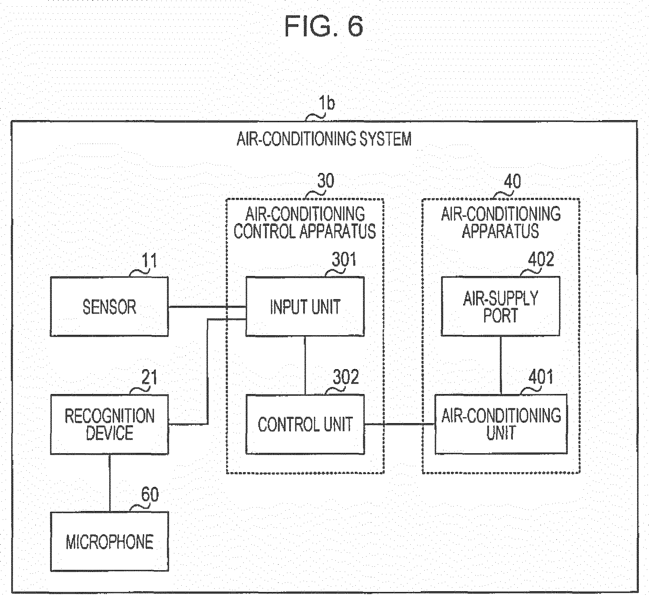

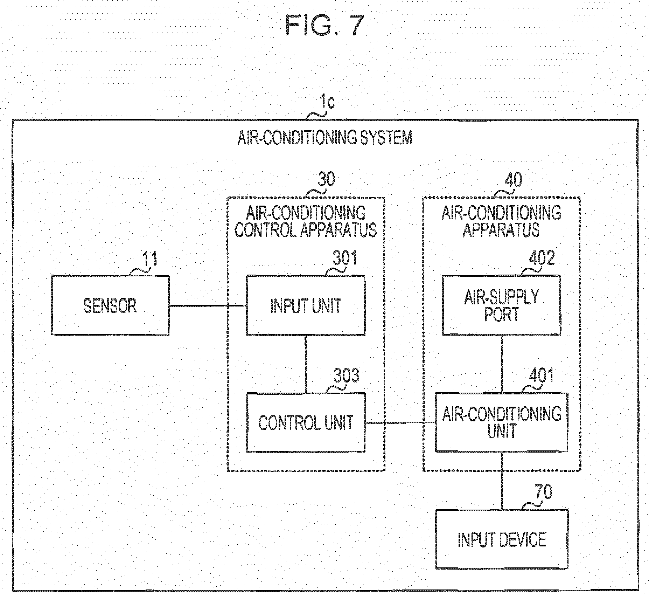

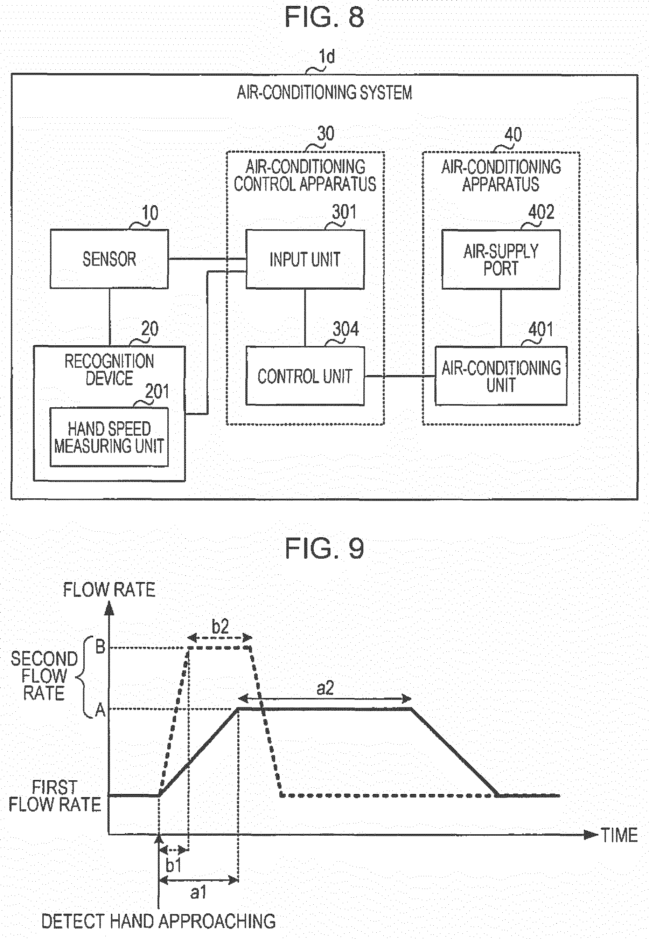

Fig. 1 is a block diagram illustrating an example configuration of an air-conditioning system according to a first embodiment;Fig. 2 is a flowchart showing an example operation of the air-conditioning system according to the first embodiment;Fig. 3 shows a specific example of flow rate control according to the first embodiment;Fig. 4A is a conceptual illustration of air supply at a first flow rate according to the first embodiment;Fig. 4B is a conceptual illustration of air supply at a second flow rate according to the first embodiment;Fig. 4C is a conceptual illustration of setting air supply at the first flow rate again according to the first embodiment;Fig. 5 is a block diagram illustrating an example configuration of an air-conditioning system according to a first variation;Fig. 6 is a block diagram illustrating an example configuration of an air-conditioning system according to a second variation;Fig. 7 is a block diagram illustrating an example configuration of another air-conditioning system according to the second variation;Fig. 8 is a block diagram illustrating an example configuration of an air-conditioning system according to a third variation including measurement of the speed of approach according to the invention;
Fig. 9 shows a specific example flow rate control according to the third variation including measurement of the speed of approach according to the invention;

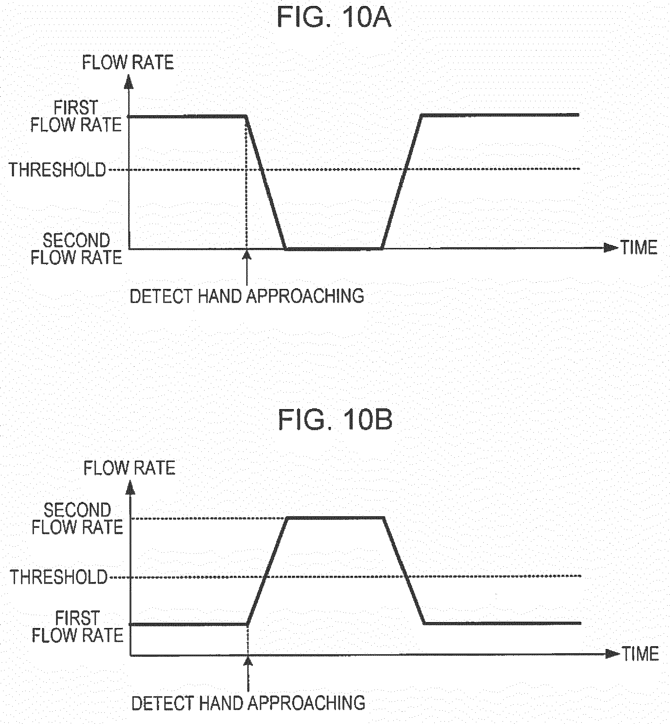

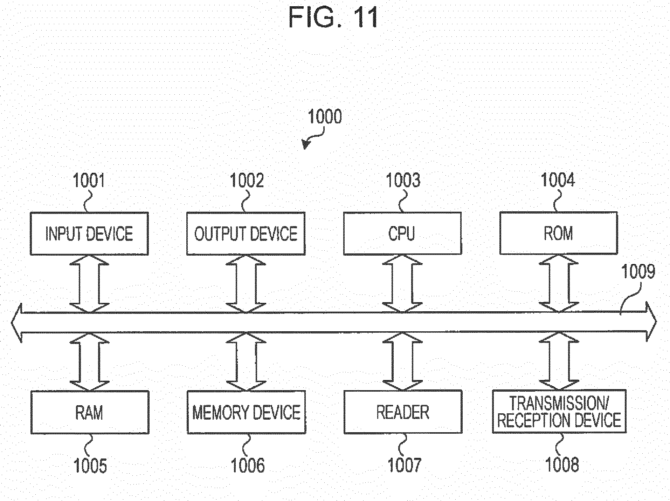

Fig. 10A shows a specific example flow rate control in a case where a first flow rate is greater than or equal to a threshold according to a fourth variation;Fig. 10B shows a specific example flow rate control in a case where a first flow rate is less than the threshold according to the fourth variation; and Fig. 11 is a block diagram illustrating example hardware configurations of an air-conditioning system and an air-conditioning control apparatus according to an embodiment.

### DETAILED DESCRIPTION

Embodiments of the present invention will be described in detail with reference to the drawings.

### First Embodiment

An embodiment will be described with reference to the drawings.

Fig. 1 is a block diagram illustrating an example configuration of an air-conditioning system 1 according to the embodiment.

In Fig. 1, the air-conditioning system 1 includes a sensor 10, a recognition device 20, an air-conditioning control apparatus 30, and an air-conditioning apparatus 40 (e.g., an air-conditioner). The air-conditioning control apparatus 30 includes an input unit 301 and a control unit 302. The air-conditioning apparatus 40 includes an air-conditioning unit 401 and an air-supply port 402.

The air-conditioning system 1 is, for example, a system used in a movable body such as a vehicle. In the embodiment, a user is a passenger of a vehicle.

The air-conditioning system 1 recognizes a change request for changing air-conditioning setting by a gesture input operation of the user and adjusts air supply in response to the change request.

Before the gesture input operation of the user, the air-conditioning system 1 notifies the user, by using air supply, of acceptability of a gesture operation (that the system 1 can accept a request). That is, in the air-conditioning system 1, the user first performs an operation of making the air-conditioning system 1 in an acceptance state (i.e., specifies operation target equipment), and then performs an operation for issuing a change request for changing air-conditioning setting to the air-conditioning system 1 (gesture operation).

Examples of the "gesture operation" include an operation of moving a user's hand away from the air-supply port 402 in order to increase the flow rate of wind from the air-supply port 402, and an operation of moving the user's hand toward the air-supply port 402 in order to reduce the flow rate of wind from the air-supply port 402. The gesture operations are merely examples, and the present invention is not limited to these examples.

Examples of the "operation for making the air-conditioning system 1 in an acceptance state" include an operation of moving the user's hand toward (causing the user's hand to be near) a location near the air-supply port 402 so that the user's hand is detected by the sensor 10. This operation is merely an example, and the present invention not limited to this example.

Components of the air-conditioning system 1 illustrated in Fig. 1 will now be described.

The sensor 10 is disposed near the air-supply port 402, for example. Examples of the sensor 10 include a time of flight (TOF) sensor. The sensor 10 detects the presence of an object (e.g., a user's hand) near the air-supply port 402. The sensor 10 outputs, to the air-conditioning control apparatus 30 (input unit 301), a detection signal indicating the presence of the user's hand near the air-supply port 402.

The sensor 10 is an image sensor that acquires a gesture image indicating a gesture input operation of the user and outputs the gesture image to the recognition device 20.

The sensor 10 may be a single sensor or constituted by a plurality of sensors.

The recognition device 20 performs an image recognition process on the gesture image received from the sensor 10, and recognizes a gesture operation such as movement of the user's hand away from or toward the air-supply port 402 or an upward or downward orientation of the palm. After the recognition of the gesture operation, the recognition device 20 refers to a database storing correspondences between gesture operations and change requests for changing air-conditioning setting of the air-conditioning apparatus 40, and recognizes (specifies) a change request corresponding to the gesture operation recognized based on the gesture image received from the sensor 10. The recognition device 20 outputs the recognition results (i.e., change request) to the air-conditioning control apparatus 30 (input unit 301).

Here, examples of air-conditioning setting of the air-conditioning apparatus 40 include a flow rate, a direction, a humidity, and a temperature of wind from the air-supply port 402. The "change request" herein is a change request for changing at least one of these properties of wind.

The database referred to by the recognition device 20 may be held in the recognition device 20, other equipment (not shown) in the air-conditioning system 1, or a server (e.g., unillustrated cloud server) connected through a network (including the Internet).

The air-conditioning control apparatus 30 outputs, to the air-conditioning apparatus 40, a control signal for notifying the user that the air-conditioning system 1 was specified as operation target equipment of the user by using a change in the flow rate of wind from the air-supply port 402. Then, the air-conditioning control apparatus 30 controls the wind from the air-supply port 402, based on a change request for changing air-conditioning setting corresponding to the gesture input operation of the user.

Specifically, the input unit 301 of the air-conditioning control apparatus 30 receives, from the sensor 10, a detection signal indicating the presence of a user's hand near the air-supply port 402 of the air-conditioning apparatus 40. The input unit 301 receives, from the recognition device 20, a detection result of the change request for changing air-conditioning setting. The input unit 301 outputs the received detection signal or the recognition result to the control unit 302.

The control unit 302 controls the air-conditioning apparatus 40 based on the detection signal output from the input unit 301. Specifically, in a case where wind from the air-supply port 402 is set at the first flow rate and the input unit 301 receives the detection signal, the control unit 302 outputs a control signal to the air-conditioning apparatus 40 (air-conditioning unit 401). The control signal includes a signal that changes wind from the air-supply port 402 to a second flow rate different from the first flow rate, continues the second flow rate for a predetermined time (hereinafter referred to as a "duration time"), and then setting the wind from the air-supply port 402 at the first flow rate again.

The air-conditioning control apparatus 30 notifies the user that the air-conditioning system 1 is specified as operation target equipment of the user by changing wind from the air-supply port 402 from the first flow rate to the second flow rate. That is, the user recognizes that the air-conditioning system 1 is in an acceptance state by detecting a change of the flow rate. Then the user performs a gesture operation near the air-supply port 402 (sensor 10), thereby issuing a change request for changing air-conditioning setting of the air-conditioning apparatus 40.

In a case where the user issues the change request for changing air-conditioning setting, the control unit 302 causes the air-conditioning unit 401 to adjust properties of wind from the air-supply port 402, based on a detection result received by the input unit 301 from the recognition device 20.

Based on the control signal received from the air-conditioning control apparatus 30, the air-conditioning unit 401 of the air-conditioning apparatus 40 adjusts properties of wind from the air-supply port 402.

The air-supply port 402 supplies air conditioned in the air-conditioning unit 401 to a cabin.

In the air-conditioning system 1 illustrated in Fig. 1, the sensor 10, the recognition device 20, and the air-conditioning control apparatus 30 may constitute an air-conditioning control system. The air-conditioning control apparatus 30 and the air-conditioning apparatus 40 illustrated in Fig. 1 may constitute an air-conditioning apparatus.

The foregoing description is directed to the example configuration of the air-conditioning system 1 according to the embodiment.

Next, an example operation of the air-conditioning system 1 according to the embodiment will be described with reference to Figs. 2 and 3 and Figs. 4A to 4C.

Fig. 2 is a flowchart showing an example operation of the air-conditioning system 1 according to the embodiment.

Fig. 3 is a graph showing an example of a change with time of a flow rate of wind from the air-supply port 402. Figs. 4A to 4C are conceptual illustrations of operations of the user and the flow rate of wind from the air-supply port 402. Other vehicle-mounted equipment (e.g., navigation equipment and audio equipment) disposed near the air-supply port 402 in Figs. 4A to 4C are merely examples, and the present invention is not limited to these examples.

In Fig. 2, at step (hereinafter referred to as "ST") 101, the air-conditioning control apparatus 30 sets wind from the air-supply port 402 of the air-conditioning apparatus 40 at the first flow rate. At this time, as illustrated in Fig. 4A, it is assumed that a hand of the user is not detected near the air-supply port 402 from which wind at the first flow rate is supplied. The first flow rate may be 0 (in a state in which the air-conditioner is OFF).

At ST102, the air-conditioning control apparatus 30 determines whether a detection signal is input from the sensor 10 disposed near the air-supply port 402 or not. That is, the air-conditioning control apparatus 30 determines whether a hand of the user is present in a predetermined range near the air-supply port 402.

If the detection signal is not input (No at ST102), the air-conditioning control apparatus 30 returns to the process at ST101.

On the other hand, as illustrated in Fig. 4B, if the sensor 10 (not shown in Fig. 4B) detects the presence of a hand of the user near the air-supply port 402, a detection signal is input from the sensor 10 to the air-conditioning control apparatus 30 (Yes at ST102). In this case, at ST103, the air-conditioning control apparatus 30 outputs a control signal for causing the air-conditioning apparatus 40 to change the flow rate of wind from the air-supply port 402 from the first flow rate set at ST101 to the second flow rate, and after a lapse of a duration time, setting the wind from the air-supply port 402 at the first flow rate again.

As illustrated in Fig. 3, when the air-conditioning apparatus 40 receives the control signal from the air-conditioning control apparatus 30 (i.e., when a hand of the user is detected near the air-supply port 402) while wind at the first flow rate is supplied from the air-supply port 402 (see Fig. 4A), the air-conditioning apparatus 40 changes the wind from the air-supply port 402 from the first flow rate to the second flow rate (see Fig. 4B), and after a lapse of the duration time, sets the wind from the air-supply port 402 at the first flow rate again (see Fig. 4C).

In the case of Fig. 3, the second flow rate is higher than the first flow rate. For example, the second flow rate may be predetermined times as high as the first flow rate. The second flow rate only needs to be set at a level at which the user can detect a difference between the second flow rate and the first flow rate, and may be lower than the first flow rate, for example. The duration time of the second flow rate in Fig. 3 only needs to be set at a predetermined level at which the user can detect a difference between the second flow rate and the first flow rate, and may be 0.5 seconds or 1.0 second, for example.

If the air-conditioning control apparatus 30 receives a detection signal at ST102 (Yes at ST102), the change request for changing air-conditioning setting by a gesture input operation of the user is accepted.

That is, if the air-conditioning control apparatus 30 receives the detection signal at ST102, the air-conditioning control apparatus 30 changes the flow rate of wind from the air-supply port 402 at ST103 to notify the user that the air-conditioning system 1 can accept the change request for changing air-conditioning setting by the user. In this manner, the user whose hand is near the air-supply port 402 recognizes that the air-conditioning system 1 is in an acceptance state when detecting the second flow rate different from the currently set first flow rate.

Alternatively, for example, the air-conditioning control apparatus 30 may set an acceptable state from the start of accepting the change request for changing setting of the air-conditioning apparatus 40 for a predetermined time. The time when the air-conditioning control apparatus 30 starts acceptance of the change request for changing air-conditioning setting by a gesture input operation of the user may be the time when the change from the first flow rate to the second flow rate starts, a time after the change to the second flow rate, or a time after the resetting from the second flow rate to the first flow rate.

At ST104, the air-conditioning control apparatus 30 determines whether a recognition result is input from the recognition device 20 or not. That is, the air-conditioning control apparatus 30 determines whether there is a change request for changing air-conditioning setting of the air-conditioning apparatus 40 by a gesture input operation of the user or not.

If the change request is not issued after a lapse of a predetermined time (No at ST104), the air-conditioning control apparatus 30 returns to the process at ST101. That is, the air-conditioning control apparatus 30 finishes acceptance of the gesture input operation.

On the other hand, if the change request is issued (Yes at ST104), the air-conditioning control apparatus 30 causes the air-conditioning unit 40 to adjust properties of wind from the air-supply port 402 of the air-conditioning unit 40, based on a detection result received from the recognition device 20 at ST105.

The foregoing description is directed to the example operation of the air-conditioning system 1 according to the embodiment.

As described above, in the embodiment, the air-conditioning system 1 notifies the user that the air-conditioning system 1 is operation target equipment of the user (i.e., the air-conditioning system 1 is in an acceptance state), by using a change in the flow rate of wind from the air-supply port 402.

That is, the air-conditioning system 1 can intuitively notify the user that the air-conditioning system 1 is in an acceptance state, by using an air-supply process that is specific to the air-conditioning system 1. For example, in the cabin illustrated in Figs. 4A to 4C, the user detects a change in the flow rate of wind from the air-supply port 402 so that the user can intuitively recognize that the air-conditioning system 1 (not shown) is specified as operation target equipment among a plurality of types of vehicle-mounted equipment in the cabin.

Unlike conventional techniques, this eliminates the need for the user to see information (visual information) displayed on a display device so that concentration on driving is not disturbed. In addition, since the user can recognize that the air-conditioning system 1 is in an acceptance state based on a change in the flow rate, the time necessary for recognizing the acceptance state is recognized can be shortened, as compared to a conventional case where the recognition is based on sound or audio information.

Thus, in the embodiment, the user can be promptly and intuitively notified that operation target equipment is specified.

The foregoing description is directed to the embodiment of the present invention. However, the present invention is not limited to the embodiment, and various changes and modifications may be made. Variations of the embodiment will now be described.

### (First Variation)

In the case of the above embodiment, the sensor 10 detects a hand of the user and acquires a gesture image by a gesture input operation of the user. Alternatively, sensors may be individually provided for the detection of a hand of the user and acquisition of a gesture image.

Fig. 5 is a block diagram illustrating an example configuration of an air-conditioning system 1a according to a first variation. In Fig. 5, components illustrated in Fig. 1 are denoted by the same reference characters, and description thereof will not be repeated.

The air-conditioning system 1a illustrated in Fig. 5 includes a sensor 50 and a sensor 51, instead of the sensor 10 illustrated in Fig. 1. The sensor 50 and the sensor 51 are disposed near the air-supply port 402, for example.

The sensor 50 detects the presence of an object (e.g., a hand of the user) near the air-supply port 402, and outputs, to the air-conditioning control apparatus 30 (input unit 301), a detection signal indicating the presence of the user's hand near the air-supply port 402. On the other hand, the sensor 51 acquires a gesture image indicating a gesture input operation of the user and outputs the gesture image to the recognition device 20.

As described above, in the case where the detection of a hand of the user and the acquisition of a gesture image are performed by the different sensors 50 and 51, advantages similar to those in the embodiment can be obtained.

### (Second Variation)

In the case of the embodiment described above, a change request for changing air-conditioning setting is issued by a gesture input operation of the user. The request for changing air-conditioning setting, however, is not necessarily issued by the gesture input operation. In a second variation, specific examples in which a change request for changing air-conditioning setting is issued by an operation except a gesture input operation will be described.

### <First Specific Example>

In a first specific example, a change request for changing air-conditioning setting is issued by "voice."

Fig. 6 is a block diagram illustrating an example configuration of an air-conditioning system 1b according to the first specific example. In Fig. 6, components illustrated in Fig. 1 are denoted by the same reference characters, and description thereof will not be repeated. The air-conditioning system 1b illustrated in Fig. 6 additionally includes a microphone 60, as compared to Fig. 1.

In Fig. 6, the sensor 11 detects an object (e.g., a user's hand) near the air-supply port 402. That is, unlike the sensor 10 of the above embodiment, the sensor 11 does not generate a gesture image indicating a gesture input operation.

The microphone 60 acquires voice data of the user, and outputs the voice data to the recognition device 21.

The recognition device 21 is a voice recognition device, performs voice recognition on voice data received from the microphone 60, and converts the voice data to text data. The recognition device 21 refers to a database storing correspondences between text data and requests for changing air-conditioning setting of the air-conditioning apparatus 40, and recognizes a change request corresponding to the text data converted from voice data. The recognition device 21 outputs the recognition results to the air-conditioning control apparatus 30 (input unit 301).

### <Second Specific Example>

In a second specific example, a change request for changing air-conditioning setting is issued by using an "input device" will be described.

Fig. 7 is a block diagram illustrating an example configuration of an air-conditioning system 1c according to the second specific example. In Fig. 7, components illustrated in Fig. 1 or 6 are denoted by the same reference characters, and description thereof will not be repeated. The air-conditioning system 1c illustrated in Fig. 7 includes an input device 70, instead of the recognition device 20.

In a manner similar to the above embodiment, when the input unit 301 receives a detection signal from the sensor 11, the control unit 303 of the air-conditioning control apparatus 30 controls the air-conditioning apparatus 40 so that the control unit 303 notifies the user that the air-conditioning system 1c can accept the change request for changing air-conditioning setting. The control unit 303 causes the air-conditioning apparatus 40 to accept the change request for changing setting of the air-conditioning apparatus 40 when the user issues the request. In this manner, the air-conditioning system 1c comes to be in a state of accepting the change request.

The input device 70 outputs, to the air-conditioning unit 401, operation information indicating an operation by the user. The input device 70 is a plurality of operation buttons on a steering wheel, for example. These operation buttons are allocated with functions associated with operation target equipment. For example, in a case where the operation target equipment is the air-conditioning system 1c, the operation buttons are allocated with functions for changing setting of properties of wind, such as changes in flow rate, temperature, and direction. That is, in a case where the air-conditioning system 1c is in a state of accepting a change request (e.g., in an air-conditioning setting mode), the input device 70 operates as an input device for receiving the change request for changing air-conditioning setting.

In the acceptance state, the air-conditioning unit 401 supplies air obtained by adjusting properties of wind from the air-supply port 402 into the cabin, based on operation information output from the input device 70.

The foregoing description is directed to the first and second specific examples of a method for inputting a change request for changing air-conditioning setting.

As described above, in the second variation, in a manner similar to the first embodiment, each of the air-conditioning systems 1b and 1c notifies the user of the acceptance state in which the change request for changing air-conditioning setting is acceptable by changing the flow rate of wind from the air-supply port 402, depending on the presence of a hand of the user detected by the sensor 11. In this manner, similar advantages as those in the above embodiment can be obtained in the second variation.
Each of the air-conditioning systems 1b and 1c accepts the change request for changing air-conditioning setting by a voice input or an operation input of the input device to adjust the flow rate and other properties. In this manner, in the second variation, the user can change air-conditioning setting by using voice or the input device.

### (Third Variation showing an example of measurement of the speed of approach according (Third Variation)

In a showing an example of measurement of the speed of approach according to the invention third variation, a case where an air supply pattern in notifying the user of an acceptance state of a change request for changing air-conditioning setting is changed will be described.

Fig. 8 is a block diagram illustrating an example configuration of an air-conditioning system this according to the third variation. In Fig. 8, components illustrated in Fig. 1 are denoted by the same reference characters, and description thereof will not be repeated. In the air-conditioning system 1d illustrated in Fig. 8, the recognition device 20 includes a hand speed measuring unit 201.

By using a gesture image received from the sensor 10, the hand speed measuring unit 201 measures the speed of approach of a hand of the user included in the gesture image to the sensor (i.e., the speed of approach of a user's hand to the air-supply port 402, i.e., the sensor 10). The hand speed measuring unit 201 outputs, to the air-conditioning control apparatus 30, speed information indicating the measured speed of approach.

Based on the speed information received by the input unit 301 from the hand speed measuring unit 201, the control unit 304 of the air-conditioning control apparatus 30 changes the flow rate from the first flow rate to the second flow rate, and after a lapse of a duration time, sets an air supply pattern in setting the first flow rate again.

For example, as the air supply pattern, the value of the second flow rate and the length of the duration time of the second flow rate are set. Fig. 9 shows an example of setting the second flow rate according to the third variation.

For example, in a case where the approach speed measured by the hand speed measuring unit 201 is less than a threshold (in a case where a hand approaches the air-supply port 402 slowly), for example, as indicated by the solid line in Fig. 9, the control unit 304 sets an air supply pattern A in which the second flow rate is a flow rate A, a time necessary for reaching the second flow rate is a transition time a1, and a duration time of the second flow rate is a duration a2. For
example, the transition time a1 is 0.5 seconds, and the duration a2 is 1.0 second, for example.

For example, in a case where the approach speed measured by the hand speed measuring unit 201 is greater than or equal to a threshold (in a case where a hand approaches the air-supply port 402 quickly), as indicated by the broken line in Fig. 9, the control unit 304 sets an air supply pattern B in which the second flow rate is a flow rate B higher than the flow rate A, a time necessary for reaching the second flow rate is a transition time b1, and a duration time of the second flow rate is a duration b2 shorter than the duration a2. That is, as the approach speed increases, the second flow rate increases or the transition time becomes shorter, or the duration time is set shorter. For example, the transition time b1 is 0.3 seconds, which is shorter than a1, and the duration time b2 is 0.5 seconds, which is shorter than a2.

That is, in the case where the user's hand approaches the air-supply port 402 quickly, strong wind is supplied from the air-supply port 402 for a short time, whereas in the case where the user's hand approaches the air-supply port 402 slowly, mild wind is supplied from the air-supply port 402 for a long time. That is, the air supply pattern of wind supplied from the air-supply port 402 in order to notify the user that the air-conditioning system 1d is in the acceptance state is adjusted in accordance with the speed at which the user's hand approaches the air-supply port 402.

In this manner, the air-conditioning system 1d can notify the user without surprise that the air-conditioning system 1d is in the acceptance state by using gentle wind, in a normal situation (i.e., in the case where the speed described above is less than the threshold). On the other hand, in a case where the user wishes to operate quickly (i.e., the above-described speed is greater than or equal to the threshold), the air-conditioning system 1d can notify the user without surprise that the air-conditioning system 1d is in the acceptance state by using strong wind.

### (Fourth Variation)

In the case of the embodiment described above, the flow rate (second flow rate) for notifying the user of the acceptance state is higher than the currently set flow rate (first flow rate). On the other hand, in the fourth variation, a case where the flow rate for notifying the use of the acceptance state is set in accordance with the currently set flow rate (first flow rate).

An air-conditioning system according to the fourth variation has a basic structure shared by the air-conditioning system 1 according to the embodiment above, and thus, description will also refers to Fig. 1.

The control unit 302 of the air-conditioning control apparatus 30 compares the first flow rate with a predetermined threshold. If the first flow rate is less than the threshold, the control unit 302 sets the second flow rate higher than the first flow rate, whereas if the first flow rate is greater than or equal to the threshold, the control unit 302 sets the second flow rate lower than the first flow rate.

Figs. 10A and 10B show examples of setting of the second flow rate by the control unit 302.

As illustrated in Fig. 10A, in a case where the first flow rate is greater than or equal to the threshold, the control unit 302 sets the second flow rate lower than the first flow rate. Suppose the first flow rate is greater than or equal to the threshold and the second flow rate is set higher than the first flow rate, the set value of the second flow rate exceeds a maximum flow rate at which air can be supplied so that the flow rate of wind actually supplied from the air-supply port 402 is limited to the maximum flow rate at which air can be supplied. In this case, the difference in change between the first flow rate and the second flow rate that is the flow rate of air actually supplied is smaller than expected, and thus, it is difficult for the user to recognize that the air-conditioning system 1 is an acceptance state. On the other hand, as illustrated in Fig. 10A, in a case where the first flow rate is greater than or equal to the threshold (i.e., the first flow rate is relatively high), the second flow rate is set lower than the first flow rate so that an expected difference in change between the first flow rate and the second flow rate can be obtained, thus ensuring that the use can be notified that the air-conditioning system 1 is in the acceptance state.

In the case of Fig. 10A, the second flow rate is 0 (without air supply). However, the value of the second flow rate is not limited to 0.

Similarly, as illustrated in Fig. 10B, in a case where the first flow rate is less than the threshold, the control unit 302 sets the second flow rate higher than the first flow rate. Suppose the first flow rate is less than the threshold and the second flow rate is lower than the first flow rate, the set value of the second flow rate might be less than zero. In this case, the flow rate of wind actually supplied from the air-supply port 402 is zero (without air supply). Thus, the difference in change between the first flow rate and the second flow rate that is the flow rate of air actually supplied is smaller than expected, and thus, it is difficult for the user to recognize that the air-conditioning system 1 is an acceptance state. On the other hand, as illustrated in Fig. 10B, in the case where the first flow rate is less than the threshold (i.e., the first flow rate is relatively low), the second flow rate is set higher than the first flow rate so an expected difference in change between the first flow rate and the second flow rate can be obtained, thus ensuring that the use can be notified that the air-conditioning system 1 is in the acceptance state.

The variations have been described above.

The variations of the embodiment described above may be combined in any manner in application.

Functions of units of the air-conditioning system 1 and the air-conditioning control apparatus 30 can be implemented by a computer program.

Fig. 11 illustrates a hardware configuration of a computer having units whose functions are implemented by a program. A computer 1000 includes an input device 1001 such as an input button and a touch pad, an output device 1002 such as a display and a speaker, a central processing unit (CPU) 1003, a read only memory (ROM) 1004, a random access memory (RAM) 1005, a memory device 1006 such as a hard disk device and a solid state drive (SSD), a reader 1007 for reading information from a recording medium such as a digital versatile disk read only memory (DVD-ROM) or a universal serial bus (USB) memory, and a transmission/reception device 1008 for performing communication through the network. These devices are connected to one another by a bus 1009.

The reader 1007 reads a program for implementing functions of the above-described devices from the recording medium that stores the program, and causes the memory device 1006 to store the read-out program. Alternatively, the transmission/reception device 1008 communicates with a server device connected to the network and causes the memory device 1006 to store a program for implementing functions of the above-described devices downloaded from the server device.

Then, the CPU1003 copies the program stored in the memory device 1006 into the RAM 1005, and sequentially reads instructions included in the program from the RAM 1005 to execute the instructions, thereby implementing the functions of the devices. In executing the program, information obtained in the processes described in the above embodiment is stored in the RAM 1005 or the memory device 1006, and is suitably used.

The present invention is useful for an air-conditioning system that controls air supply into a vehicle.

## Claims

1. An air-conditioning control apparatus (30) comprising:
a receiver (301), which in operation, receives a detection signal from a sensor (10) for detecting a presence of an object at an air-supply port (402) of an air-conditioning apparatus (40), and that receives a recognition result from a recognition device (20) for recognizing a change request for changing setting of the air-conditioning apparatus (40) by a user, and that receives speed information indicating a speed of approach of the object to the sensor (10); and
a controller (304), which in operation, controls the air-conditioning apparatus (40) based on the detection signal, wherein
in a case where wind from the air-supply port (402) is set at a first flow rate and the receiver (301) receives the detection signal, the controller (304) is adapted to output a first control signal for causing the air-conditioning apparatus (40) to change the first flow rate to a second flow rate different from the first flow rate for a predetermined time and further adapted to thereafter set the wind from the air-supply port (402) to the first flow rate again, wherein the controller (304) is further adapted to set the second flow rate and the predetermined time as well as a transition time between the first and second flow rates based on the received speed information; and
in a case where the change request is recognized, the controller (304) is further adapted to output a second control signal for causing the air-conditioning apparatus (40) to adjust a property of wind from the air-supply port (402), based on the recognition result received by the receiver (301).

2. The air-conditioning control apparatus (30) according to Claim 1, wherein at least one of the receiver (301) and the controller (304) is included in a processor.

3. The air-conditioning control apparatus (30) according to Claim 1, wherein
if the first flow rate is less than a threshold, the second flow rate is higher than the first flow rate, and
if the first flow rate is greater than or equal to the threshold, the second flow rate is lower than the first flow rate.

4. The air-conditioning control apparatus (30) according to Claim 1, wherein
the property of wind from the air-supply port (402) is at least one of a flow rate, a direction, a humidity, or a temperature of the wind.

5. An air-conditioning control method comprising the steps of:
receiving, by a receiver, (301) a detection signal from a sensor (10) for detecting a presence of an object at an air-supply port (402) of an air-conditioning apparatus (40), receiving, by the receiver (301), a recognition result from a recognition device (20) for recognizing a change request for changing setting of the air-conditioning apparatus (40) by a user,
receiving, by the receiver (301), speed information indicating a speed of approach of the object to the sensor (10), and
controlling the air-conditioning apparatus (40) based on the detection signal;
wherein:
in a case where wind from the air-supply port (402) is set at a first flow rate and the receiver (301) receives the detection signal, outputting, by a controller (304), a first control signal for causing the air-conditioning apparatus (40) to change the first flow rate to a second flow rate different from the first flow rate for a predetermined time and thereafter setting the wind from the air-supply port (402) to the first flow rate again,
wherein the second flow rate and the predetermined time as well as a transition time between the first and second flow rates are set based on the received speed information; and
in a case where the change request is recognized, outputting, by the controller (304), a second control signal for causing the air-conditioning apparatus (40) to adjust a property of wind from the air-supply port (402), based on the recognition result received by the receiver (301).

6. An air-conditioning control system (1d) comprising:
a sensor (10) adapted to detect a presence of an object at an air-supply port (402) of an air-conditioning apparatus (40);
a recognition device (20) adapted to recognize a change request for changing setting of the air-conditioning apparatus (40) by a user;
an air-conditioning control apparatus (30) according to one of claims 1 to 4; and
an air-conditioning apparatus (40) comprising an air-conditioning unit (401) adapted to perform air-conditioning for adjusting a flow rate based on the control signal from the control unit (304) of the air-conditioning control apparatus (30) and further comprising an air-supply port (402) from which wind at a flow rate adjusted by the air-conditioning unit (401) is supplied.

7. The air-conditioning control system (1d) according to Claim 6, wherein the sensor (10) is an image sensor adapted to acquire a gesture image of the user and to output the gesture image to the recognition device (20), and the recognition device (20) is further adapted to perform an image recognition process on the gesture image received from the sensor (10) to recognize a gesture operation, and to recognize the change request based on a database storing correspondences between change requests for changing setting of the air-conditioning apparatus (40) and gesture operations and based on the gesture operation recognized from the gesture image received from the sensor (10).

8. The air-conditioning control system (1d) according to Claim 6 or 7, wherein
the recognition device (20) is a voice recognition device adapted to convert voice data acquired with a microphone to text data, and
wherein the recognition device (20) is further adapted to recognize the change request for changing setting of the air-conditioning apparatus (40) based on a database concerning the change request and the text data obtained by the conversion.

9. The air-conditioning control system (1d) according to one of claims 6 to 8, wherein
the recognition device (20) includes a measurement unit (201) adapted to measure an approach speed of the object toward the sensor (10), and
as the approach speed increases, the second flow rate increases and the predetermined time decreases.

10. A non-transitory computer-readable recording medium storing an air-conditioning control program to be executed by a computer of an air-conditioning control apparatus (30) according to one of claims 1 to 4.

## Patentansprüche

1. Klimatisiersteuervorrichtung (30), umfassend:
einen Empfänger (301), der im Betrieb ein Erfassungssignal von einem Sensor (10) zum Erfassen des Vorhandenseins eines Objekts an einem Luftzufuhranschluss (402) einer Klimatisiervorrichtung (40) empfängt und der ein Erkennungsergebnis von einer Erkennungsvorrichtung (20) zum Erkennen einer Änderungsanfrage zum Ändern der Einstellung der Klimatisiervorrichtung (40) durch einen Benutzer empfängt und Geschwindigkeitsinformationen empfängt, die eine Annäherungsgeschwindigkeit des Objektes an den Sensor (10) anzeigen; und
eine Steuereinheit (304), die im Betrieb die Klimatisiervorrichtung (40) basierend auf dem Erfassungssignal steuert, wobei
in einem Fall, in dem Wind aus dem Luftzufuhranschluss (402) auf eine erste Strömungsrate eingestellt ist und der Empfänger (301) das Erfassungssignal empfängt, die Steuereinheit (304) dazu eingerichtet ist, ein erstes Steuersignal auszugeben, um die Klimatisiervorrichtung (40) zu veranlassen, die erste Strömungsrate auf eine zweite Strömungsrate, die sich von der ersten Strömungsrate unterscheidet für eine vorbestimmte Zeit zu ändern, und weiterhin dazu eingerichtet ist, anschließend den Wind aus dem Luftzufuhranschluss (402) wieder auf die erste Strömungsrate einzustellen, wobei die Steuereinheit (304) weiterhin dazu eingerichtet ist, die zweite Strömungsrate und die vorbestimmte Zeit sowie eine Übergangszeit zwischen der ersten und der zweiten Strömungsrate basierend auf den empfangenen Geschwindigkeitsinformationen einzustellen; und
in einem Fall, in dem die Änderungsanfrage erkannt wird, die Steuereinheit (304) weiterhin dazu eingerichtet ist, ein zweites Steuersignal auszugeben, um zu bewirken, dass die Klimatisiervorrichtung (40) eine Eigenschaft von Wind aus dem Luftzufuhranschluss (402) basierend auf dem Erkennungsergebnis einstellt, das von dem Empfänger (301) empfangen wird.

2. Klimatisiersteuervorrichtung (30) nach Anspruch 1, bei der der Empfänger (301) und/oder die Steuereinheit (304) in einem Prozessor enthalten sind.

3. Klimatisiersteuervorrichtung (30) nach Anspruch 1, bei der,
wenn die erste Strömungsrate kleiner als ein Schwellenwert ist, die zweite Strömungsrate höher als die erste Strömungsrate ist und,
wenn die erste Strömungsrate größer oder gleich dem Schwellenwert ist, die zweite Strömungsrate niedriger als die erste Strömungsrate ist.

4. Klimatisiersteuervorrichtung (30) nach Anspruch 1, bei der die Eigenschaft von Wind aus dem Luftzufuhranschluss (402) eine Strömungsrate und/oder eine Richtung und/oder eine Feuchtigkeit und/oder eine Temperatur des Windes ist.

5. Klimatisiersteuerverfahren, umfassend folgende Schritte:
Empfangen (301) eines Erfassungssignals von einem Sensor (10) durch einen Empfänger für das Erkennen des Vorhandenseins eines Gegenstandes an einem Luftzufuhranschluss (402) einer Klimatisiervorrichtung (40),
Empfangen eines Erkennungsergebnisses von einer Erkennungsvorrichtung (20) durch den Empfänger (301) für das Erkennen einer Änderungsanforderung zum Ändern der Einstellung der Klimatisiervorrichtung (40) durch einen Benutzer,
Empfangen von Geschwindigkeitsinformationen, die eine Annäherungsgeschwindigkeit des Objektes an den Sensor (10) anzeigen, durch den Empfänger (301), und
Steuern der Klimatisiervorrichtung (40) basierend auf dem Erfassungssignal;
wobei:
in einem Fall, in dem Wind aus dem Luftzufuhranschluss (402) auf eine erste Strömungsrate eingestellt ist und der Empfänger (301) das Erfassungssignal empfängt, die Steuereinheit (304) ein erstes Steuersignal ausgibt, um die Klimatisiervorrichtung (40) zu veranlassen, die erste Strömungsrate auf eine zweite Strömungsrate, die sich von der ersten Strömungsrate unterscheidet für eine vorbestimmte Zeit zu ändern, und anschließend den Wind aus dem Luftzufuhranschluss (402) wieder auf die erste Strömungsrate einstellt, wobei die zweite Strömungsrate und die vorbestimmte Zeit sowie eine Übergangszeit zwischen der ersten und der zweiten Strömungsrate basierend auf den empfangenen Geschwindigkeitsinformationen eingestellt werden; und
in einem Fall, in dem die Änderungsanfrage erkannt wird, die Steuereinheit (304) ein zweites Steuersignal ausgibt um zu bewirken, dass die Klimatisiervorrichtung (40) eine Eigenschaft von Wind aus dem Luftzufuhranschluss (402) basierend auf dem Erkennungsergebnis einstellt, das von dem Empfänger (301) empfangen wird.

6. Klimatisiersteuersystem (1d), umfassend:
einen Sensor (10), der dazu eingerichtet ist, ein Vorhandensein eines Objektes an einem Luftzufuhranschluss (402) einer Klimatisiervorrichtung (40) zu erfassen;
eine Erkennungsvorrichtung (20), die dazu eingerichtet ist, eine Änderungsanfrage zum Ändern der Einstellung der Klimatisiervorrichtung (40) durch einen Benutzer zu erkennen;
eine Klimatisiersteuervorrichtung (30) nach einem der Ansprüche 1 bis 4; und
eine Klimatisiervorrichtung (40), die eine Klimatisiereinheit (401) umfasst, die dazu eingerichtet ist, eine Klimatisierung zum Einstellen einer Strömungsrate basierend auf dem Steuersignal aus der Steuereinheit (304) der Klimatisiersteuervorrichtung (30) auszuführen, und weiterhin umfassend einen Luftzufuhranschluss (402), aus dem der Wind mit einer durch die Klimatisiereinheit (401) eingestellten Strömungsrate zugeführt wird.

7. Klimatisiersteuersystem (1d) nach Anspruch 6, bei dem
der Sensor (10) ein Bildsensor ist, der dazu eingerichtet ist, ein Gestenbild des Benutzers zu erfassen und das Gestenbild an die Erkennungsvorrichtung (20) auszugeben, und
die Erkennungsvorrichtung (20) weiterhin dazu eingerichtet ist, einen Bilderkennungsprozess an dem von dem Sensor (10) empfangenen Gestenbild auszuführen, um eine Gestenbedienung zu erkennen, und die Änderungsanfrage basierend auf einer Datenbank, die Entsprechungen zwischen Änderungsanforderungen zum Ändern der Einstellung der Klimatisiervorrichtung (40) und Gestenoperationen speichert, und basierend auf der Gestenoperation zu erkennen, die aus dem von dem Sensor (10) empfangenen Gestenbild erkannt wird.

8. Klimatisiersteuersystem (1d) nach Anspruch 6 oder 7, bei dem
die Erkennungsvorrichtung (20) eine Spracherkennungsvorrichtung ist, die dazu eingerichtet ist, mit einem Mikrofon erfasste Sprachdaten in Textdaten umzuwandeln, und
die Erkennungsvorrichtung (20) weiterhin dazu eingerichtet ist, die Änderungsanforderung zum Ändern der Einstellung der Klimatisiervorrichtung (40) basierend auf einer Datenbank bezüglich der Änderungsanfrage und der Textdaten, die man durch die Umwandlung erhält, zu erkennen.

9. Klimatisiersteuersystem (1d) nach einem der Ansprüche 6 bis 8, bei dem
die Erkennungsvorrichtung (20) eine Messeinheit (201) umfasst, die dazu eingerichtet ist, eine Annäherungsgeschwindigkeit des Objekts an den Sensor (10) zu messen, und
wenn die Annäherungsgeschwindigkeit zunimmt, sich die zweite Strömungsrate erhöht und die vorbestimmte Zeit abnimmt.

10. Nicht transitorisches computerlesbares Aufzeichnungsmedium, das ein Klimatisiersteuerprogramm speichert, das von einem Computer einer Klimatisiersteuervorrichtung (30) gemäß einem der Ansprüche 1 bis 4 auszuführen ist.

## Revendications

1. Appareil de commande de climatisation (30), comprenant :
un récepteur (301) qui, lors du fonctionnement, reçoit un signal de détection d'un capteur (10) servant à détecter la présence d'un objet au niveau d'un orifice d'alimentation en air (402) d'un appareil de climatisation (40), et qui reçoit un résultat de reconnaissance d'un dispositif de reconnaissance (20) destiné à reconnaître une demande de modification par un utilisateur en vue de modifier un réglage de l'appareil de climatisation (40), et qui reçoit des informations de vitesse indiquant une vitesse d'approche de l'objet en direction du capteur (10) ; et
un dispositif de commande (304) qui, lors du fonctionnement, commande l'appareil de climatisation (40) en fonction du signal de détection, dans lequel,
dans le cas où un courant d'air sortant par l'orifice d'alimentation en air (402) est réglé sur un premier débit et où le récepteur (301) reçoit le signal de détection, le dispositif de commande (304) est conçu pour délivrer en sortie un premier signal de commande pour amener l'appareil de climatisation (40) à modifier le premier débit pour passer à un second débit différent du premier débit pendant une durée prédéterminée, et conçu en outre pour régler ensuite le courant d'air sortant par l'orifice d'alimentation en air (402) sur le premier débit à nouveau, dans lequel le dispositif de commande (304) est en outre conçu pour régler le second débit et la durée prédéterminée ainsi qu'un temps de transition entre le premier débit et le second débit sur la base des informations de vitesse reçues ; et
dans le cas où la demande de modification est reconnue, le dispositif de commande (304) est en outre conçu pour délivrer en sortie un second signal de commande pour amener l'appareil de climatisation (40) à ajuster une propriété du courant d'air sortant par l'orifice d'alimentation en air (402) en fonction du résultat de la reconnaissance reçu par le récepteur (301).

2. Appareil de commande de climatisation (30) selon la revendication 1, dans lequel au moins le récepteur (301) et/ou le dispositif de commande (304) est inclus dans un processeur.

3. Appareil de commande de climatisation (30) selon la revendication 1, dans lequel,
si le premier débit est inférieur à un seuil, le second débit est supérieur au premier débit et,
si le premier débit est supérieur ou égal au seuil, le second débit est inférieur au premier débit.

4. Appareil de commande de climatisation (30) selon la revendication 1, dans lequel la propriété du courant d'air sortant par l'orifice d'alimentation en air (402) est au moins un débit et/ou une direction et/ou une humidité et/ou une température du courant d'air.

5. Procédé de commande de climatisation comprenant les étapes de :
réception, par un récepteur (301), d'un signal de détection d'un capteur (10) servant à détecter la présence d'un objet au niveau d'un orifice d'alimentation en air (402) d'un appareil de climatisation (40),
réception, par le récepteur (301), d'un résultat de reconnaissance d'un dispositif de reconnaissance (20) destiné à reconnaître une demande de modification par un utilisateur en vue de modifier un réglage de l'appareil de climatisation (40),
réception, par le récepteur (301), d'informations de vitesse indiquant une vitesse d'approche de l'objet en direction du capteur (10), et
commande de l'appareil de climatisation (40) en fonction du signal de détection ;
dans lequel :
dans le cas où un courant d'air sortant par l'orifice d'alimentation en air (402) est réglé sur un premier débit et où le récepteur (301) reçoit le signal de détection, un dispositif de commande (304) délivre en sortie un premier signal de commande pour amener l'appareil de climatisation (40) à modifier le premier débit pour passer à un second débit différent du premier débit pendant une durée prédéterminée, et règle ensuite le courant d'air sortant par l'orifice d'alimentation en air (402) sur le premier débit à nouveau,
dans lequel le second débit et la durée prédéterminée ainsi qu'un temps de transition entre le premier débit et le second débit sont réglés sur la base des informations de vitesse reçues ; et
dans le cas où la demande de modification est reconnue, le dispositif de commande (304) délivre en sortie un second signal de commande pour amener l'appareil de climatisation (40) à ajuster une propriété du courant d'air sortant par l'orifice d'alimentation en air (402) en fonction du résultat de la reconnaissance reçu par le récepteur (301).

6. Système de commande de climatisation (1d) comprenant :
un capteur (10) conçu pour détecter la présence d'un objet au niveau d'un orifice d'alimentation en air (402) d'un appareil de climatisation (40) ;
un dispositif de reconnaissance (20) conçu pour reconnaître une demande de modification par un utilisateur en vue de modifier un réglage de l'appareil de climatisation (40) ;
un appareil de commande de climatisation (30) selon l'une des revendications 1 à 4 ; et
un appareil de climatisation (40) comprenant une unité de climatisation (401) conçue pour réaliser une climatisation pour ajuster un débit en fonction du signal de commande provenant de l'unité de commande (304) de l'appareil de commande de climatisation (30), et comprenant en outre un orifice d'alimentation en air (4) par lequel un courant d'air à un débit ajusté par l'unité de climatisation (401) est fourni.

7. Système de commande de climatisation (1d) selon la revendication 6, dans lequel
le capteur (10) est un capteur d'image conçu pour saisir une image d'un geste de l'utilisateur et pour délivrer en sortie l'image du geste au dispositif de reconnaissance (20), et
le dispositif de reconnaissance (20) est en outre conçu pour réaliser un processus de reconnaissance d'image sur l'image de geste reçue du capteur (10) pour reconnaître une opération gestuelle et pour reconnaître la demande de modification en s'appuyant sur une base de données enregistrant des correspondances entre des demandes de modification en vue de modifier un réglage de l'appareil de climatisation (40) et des opérations gestuelles, et sur l'opération gestuelle reconnue d'après l'image de geste reçue du capteur (10).

8. Système de commande de climatisation (1d) selon la revendication 6 ou 7, dans lequel
le dispositif de reconnaissance (20) est un dispositif de reconnaissance vocale conçu pour convertir des données de voix saisies au moyen d'un microphone en données textuelles, et
dans lequel le dispositif de reconnaissance (20) est en outre conçu pour reconnaître la demande de modification en vue de modifier un réglage de l'appareil de climatisation (40) en s'appuyant sur une base de données concernant la demande de modification et les données textuelles obtenues par la conversion.

9. Système de commande de climatisation (1d) selon l'une des revendications 6 à 8, dans lequel
le dispositif de reconnaissance (20) inclut une unité de mesure (201) conçue pour mesurer une vitesse d'approche de l'objet en direction du capteur (10) et, à mesure que la vitesse d'approche augmente, le second débit augmente et la durée prédéterminée diminue.

10. Support d'enregistrement non transitoire lisible par ordinateur stockant un programme de commande de climatisation destiné à être exécuté par un ordinateur d'un appareil de commande de climatisation (30) selon l'une des revendications 1 à 4.
